(19) Europäisches Patentamt
European Patent Office
Office européen des brevets

(11) **EP 3 475 130 B1**

(12) **EUROPÄISCHE PATENTSCHRIFT**

(45) Veröffentlichungstag und Bekanntmachung des Hinweises auf die Patenterteilung:
**08.06.2022  Patentblatt 2022/23**

(21) Anmeldenummer: **17715624.7**

(22) Anmeldetag: **03.04.2017**

(51) Internationale Patentklassifikation (IPC):
**B60T 7/22** *(2006.01)*    **B60T 8/172** *(2006.01)*

(52) Gemeinsame Patentklassifikation (CPC):
**B60T 7/22; B60T 8/172;** B60T 2201/022

(86) Internationale Anmeldenummer:
**PCT/EP2017/000408**

(87) Internationale Veröffentlichungsnummer:
**WO 2017/220175 (28.12.2017 Gazette 2017/52)**

(54) **VERFAHREN ZUM DURCHFÜHREN EINER NOTBREMSUNG IN EINEM FAHRZEUG SOWIE NOTBREMSSYSTEM ZUR DURCHFÜHRUNG DES VERFAHRENS**

METHOD FOR PERFORMING EMERGENCY BRAKING IN A MOTOR VEHICLE AND EMERGENCY BRAKING SYSTEM FOR PERFORMING THE METHOD

PROCÉDÉ DE MISE EN ŒUVRE D'UN FREINAGE D'URGENCE DANS UN VÉHICULE AINSI QUE SYSTÈME DE FREINAGE D'URGENCE PERMETTANT LA MISE EN ŒUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016  DE 102016007631**

(43) Veröffentlichungstag der Anmeldung:
**01.05.2019  Patentblatt 2019/18**

(73) Patentinhaber: **ZF CV Systems Europe BV 1170 Brussels (BE)**

(72) Erfinder:
• **BREUER, Karsten 88179 Oberreute (DE)**
• **MEYER, Rüdiger 30449 Hannover (DE)**

(74) Vertreter: **Rabe, Dirk-Heinrich ZF CV Systems Hannover GmbH Am Lindener Hafen 21 30453 Hannover (DE)**

(56) Entgegenhaltungen:
EP-A1- 1 625 979          WO-A1-2010/012044
WO-A1-2015/113679      DE-A1- 4 423 966
DE-A1-102012 219 188    DE-A1-102013 205 147

## Beschreibung

Die Erfindung betrifft ein Verfahren zum Durchführen einer Notbremsung in einem Fahrzeug, insbesondere Nutzfahrzeug, sowie ein Notbremssystem zur Durchführung des Verfahrens.

In Fahrassistenzsystemen, z. B. Notbremssystemen (AEBS) oder Abstandsregelsystemen (ACC) wird ein Umfeld vor dem eigenen Fahrzeug mit einem Umgebungserfassungs-System abgescannt, um in Fahrtrichtung vorausliegende Objekte, insbesondere Fahrzeuge, erkennen zu können. Das jeweilige Fahrassistenzsystem reagiert in Abhängigkeit des erkannten Objektes mit einem Eingriff in die Fahrzeugsteuerung, beispielsweise in das Bremssystem, d. h. in Abhängigkeit einer erkannten Notbremssituation bzw. eines erfassten Abstandes zu einem vorausliegenden Fahrzeuges wird eine Bremsung des eigenen Fahrzeugs veranlasst.

Die vom jeweiligen Fahrassistenzsystem angeforderte Bremswirkung wird dabei derartig eingestellt, dass eine Kollision zum vorausliegenden Objekt mit hoher Wahrscheinlichkeit verhindert wird bzw. die Unfallfolgen im Hinblick auf Personenschäden minimiert werden, wobei im Falle eines Notbremssystems eine Fahrzeug-Soll-Verzögerung, d.h. eine negative Beschleunigung des Fahrzeuges, zunächst gemäß der Parametrierung des Bremssystems maximal eingestellt wird, um einen kurzen Bremsweg des eigenen Fahrzeugs in einer Notbremssituation zu gewährleisten. Bei einem Abstandssystem hingegen wird die Fahrzeug-Soll-Verzögerung an die des vorausliegenden Objektes angepasst, um einen gleichbleibenden Abstand zum vorausliegenden Objekt einzuhalten.

Die DE 10 2012 219 188 A1 beschreibt ein Kollisionsvermeidungssystem und ein Kollisionsvermeidungsverfahren, die dazu verwendet werden können, eine Kollision zwischen einem Trägerfahrzeug und einem Zielfahrzeug durch Eintreten in eine autonome Bremsung zu verhindern, zu vermeiden und/oder zu mildern, wenn eine bevorstehende Kollision detektiert wird. Anders als andere Verfahren, die nur zu einer autonomen Bremsung in Übereinstimmung mit vorgegebenen und statischen Bremsbefehlen fähig sind, kann das vorliegende Verfahren dynamische Bremsverfahren während eines gesamten autonomen Bremsereignisses verwenden, so dass die Verzögerung des Trägerfahrzeugs ständig in der Weise eingestellt werden kann, dass sie zu einer vernünftigen Entfernung von dem Zielfahrzeug führt.

Seite 1a

Gemäß DE 10 2004 028 160 A1 ist vorgesehen, bei Erkennen einer Notbremssituation die gegebenenfalls vom Fahrer durch Betätigung des Bremspedals vorgegebene Bremskraft automatisch auf einen maximalen Wert zu erhöhen, so dass eine maximale Fahrzeug-Soll-Verzögerung für das eigene Fahrzeug erreicht werden kann. Dadurch soll der Fahrer insbesondere in einer Notbremssituation gegen eine zu schwache Betätigung der Fahrzeugbremse geschützt werden.

Gemäß DE 199 21 238 C2 ist vorgesehen, in einem Abstandsregelsystem eine Fahrzeug-Soll-Verzögerung in Abhängigkeit des Abstandes zwischen dem eigenen Fahrzeug und dem vorausliegenden Objekt zu wählen, wobei die Regelung in drei Kategorien eingeteilt ist. Demnach wird bei kurzem Abstand eine Vollbremsung mit einer sehr hohen Fahrzeug-Soll-Verzögerung durchgeführt. Bei mittlerem oder hohem Abstand wird die Fahrzeug-Soll-Verzögerung entsprechend abgestuft niedriger gewählt, um das Fahrverhalten des eigenen Fahrzeuges an das des vorausliegenden Objektes anzupassen. Der Abstand zum vorausliegenden Fahrzeug kann hierbei prädikativ vorhergesagt werden, indem beispielsweise eine tatsächliche Fahrzeug-Ist-Verzögerung des vorausliegenden Objektes detektiert und für die Zukunft approximiert wird.

Die US 7,321,819 B2 zeigt weiterhin eine Beschleunigungsregelung für ein Fahrzeug, wobei die Fahrzeug-Soll-Verzögerung in Abhängigkeit des Abstandes zum vorausliegenden Objekt gewählt wird. Hierbei ist ergänzend vorgesehen, die Änderung der Fahrzeug-Soll-Verzögerung des eigenen Fahrzeuges zu begrenzen, so dass, wenn ein vorausliegendes Objekt abrupt abbremst, die Fahrzeug-Soll-Verzögerung des eigenen Fahrzeuges langsam nachgeführt wird. Dadurch soll der Bremskomfort erhöht werden. Der Grenzwert für die Änderung der Fahrzeug-Soll-Verzögerung des eigenen Fahrzeuges wird hierbei in Abhängigkeit der eigenen Fahrzeuggeschwindigkeit festgelegt, so dass bei höheren Fahrzeuggeschwindigkeiten eine höhere Änderung der Fahrzeug-Soll-Verzögerung erlaubt ist und das Fahrzeug in einer derartigen Fahrsituation stärker abgebremst werden kann als bei einer niedrigen Fahrzeuggeschwindigkeit.

Die DE 10 2004 054 922 A1 zeigt weiterhin ein Verfahren zur Bremskraftunterstützung. Demnach ist vorgesehen, die Bremskraft bzw. die Fahrzeug-Soll-Verzögerung in Abhängigkeit einer Kollisionswahrscheinlichkeit mit dem vorausliegenden Objekt zu regeln. Dazu wird der von einem Fahrer durchgeführte Bremsvorgang unterstützt und bei Erkennen einer Notbremssituation eine maximale Unterstützung eingestellt, so dass das eigene Fahrzeug mit einer maximalen Fahrzeug-Soll-Verzögerung abgebremst wird. Die Bremskraftunterstützung wird in Abhängigkeit der Fahrzeuggeschwindigkeit eingestellt, so dass bei höheren Fahrzeuggeschwindigkeiten entsprechend stärker unterstützt wird als bei niedrigen Fahrzeuggeschwindigkeiten. Wird in der Folge dieser unterstützenden Bremsung erkannt, dass eine Kollision vermieden werden konnte, d.h. die Kollisionswahrscheinlichkeit gesunken ist, so wird die Bremskraftunterstützung wieder zurückgenommen.

Nachteilig im Stand der Technik ist, dass die während einer autonom durchgeführten Bremsung vorgegebene Fahrzeug-Soll-Verzögerung in Abhängigkeit von im Bremssystem des Fahrzeugs parametrierten Werten eingestellt wird. Hierbei wird das Bremssystem eines bestimmten Fahrzeugtyps insbesondere im Hinblick auf die "funktionale Sicherheit" gemäß der ISO-Norm ISO 26262 derartig abgestimmt, dass während einer autonom durchgeführten Notbremsung die ISO-Norm eingehalten werden kann. Die Parametrierung wird hierbei beispielsweise festgelegt, indem das Bremsverhalten für ein sehr gut bremsendes Fahrzeug dieses Fahrzeugtyps betrachtet wird. Ergibt sich jedoch eine Abweichung im Bremsverhalten, beispielsweise aufgrund einer Variation in der Beladung des Fahrzeuges, einer Fehlfunktion des Bremssystems oder Abnutzungserscheinungen der Bremsen des Bremssystems oder auch aufgrund einer schwächeren Auslegung des Bremssystems für ein einzelnes Fahrzeug innerhalb des Fahrzeugtyps, so ist die vorab festgelegte Parametrierung nicht mehr zutreffend. Die vorab festgelegte Parametrierung kann somit für dieses einzelne Fahrzeug zu einem nicht-optimalen Bremsverhalten während einer Notbremsung führen, wobei sich beispielsweise ein zu langer oder ein zu kurzer Bremsweg in einer Notbremssituation ergeben kann; die Fahrzeugsicherheit für das eigene Fahrzeug sowie das nachfolgende Fahrzeug im Hinblick auf die ISO 26262 sinkt im Kollisionsfall.

Aufgabe der Erfindung ist daher, ein Verfahren zum Durchführen einer Notbremsung in einem Fahrzeug bereitzustellen, mit dem eine auf das Bremssystem des Fahrzeuges abgestimmte Notbremsung sicher und zuverlässig sowie unter Einhaltung von vorgegebenen Normen durchgeführt werden kann. Aufgabe ist es weiterhin, ein Notbremssystem zur Durchführung des Verfahrens bereitzustellen.

Diese Aufgabe wird durch ein Verfahren nach Anspruch 1 sowie ein Notbremssystem nach Anspruch 10 gelöst. Bevorzugte Weiterbildungen sind in den Unteransprüchen angegeben.

Erfindungsgemäß ist demnach vorgesehen, eine Fahrzeug-Soll-Verzögerung des eigenen Fahrzeuges während einer Notbremsung in Abhängigkeit mindestens einer fahrdynamischen Kenngröße, die ein tatsächliches Bremsverhalten des eigenen Fahrzeuges bzw. eine tatsächliche Reaktion des Fahrzeuges auf die eingeleitete Notbremsung angibt, anzupassen, d. h. es findet eine adaptive Regelung der Fahrzeug-Soll-Verzögerung statt, die sich nach der mindestens einen fahrdynamischen Kenngröße richtet. Die mindestens eine fahrdynamische Kenngröße wird dazu während einer autonom eingeleiteten Notbremsung kontinuierlich bestimmt, wobei die fahrdynamische Kenngröße eine Entwicklung einer eigenen Fahrzeuggeschwindigkeit über die Zeit während der Notbremsung charakterisiert und demnach aus der vorzugsweise direkt im Fahrzeug ermittelten Fahrzeuggeschwindigkeit bei einer Notbremsung hervorgeht.

Dadurch kann vorteilhafterweise erreicht werden, dass die Notbremsung anhand einer tatsächlich vorliegenden Fahrdynamik bzw. Bremsdynamik, d.h. der tatsächlichen Reaktion des Fahrzeuges auf die eingeleitete Notbremsung, durchgeführt werden kann. Da diesbezüglich nicht auf eine vorab durchgeführte feste Parametrierung des Bremssystems zurückgegriffen wird, kann auch bei einer Beeinträchtigung der Bremsperformance, beispielsweise aufgrund einer Abnutzung der Bremsen, einer Veränderung der Beladung oder auch eines Fehlverhaltens des Bremssystems, aus den aktuell vorliegenden Werten ein optimales auf die aktuelle Fahrdynamik angepasstes Bremsverhalten mit minimierten Bremswegen eingestellt werden. Dadurch kann die Notbremsung weiterhin einfach und zuverlässig auf das Bremssystem des jeweiligen Fahrzeuges abgestimmt werden, so dass auch bei identischen Fahrzeugtypen mit unterschiedlich ausgelegten Bremssystemen, beispielsweise im Hinblick auf die Bremskraft, ein optimales Bremsverhalten mit minimierten Bremswegen erreicht werden kann.

Somit wird die Fahrzeug-Soll-Verzögerung während der Notbremsung nicht in Abhängigkeit einer durch die eingeleitete Notbremsung möglicherweise verringerten Kollisionswahrscheinlichkeit geregelt, sondern vielmehr in Abhängigkeit der tatsächlichen fahrdynamischen Reaktion des eigenen Fahrzeuges auf die eingeleitete Notbremsung.

Insbesondere wird die Fahrzeug-Soll-Verzögerung erst dann in Abhängigkeit der mindestens einen fahrdynamischen Kenngröße angepasst, wenn die mindestens eine fahrdynamische Kenngröße einen fahrdynamischen Grenzwert nicht einhält, d. h. diesen überschreitet oder unterschreitet. Der jeweilige fahrdynamische Grenzwert wird hierbei gesetzlich oder in Abhängigkeit einer Norm festgelegt, so dass das Bremssystem bei einer autonom ausgeführten Notbremsung vorteilhafterweise auf das tatsächlich vorliegende Bremsverhalten des eigenen Fahrzeuges unter Berücksichtigung der einschlägigen Normen und Gesetze abgestimmt werden kann. Dazu wird die jeweilige fahrdynamische Kenngröße insbesondere während einer Notbremsung ständig überwacht und bei Nicht-Einhalten des fahrdynamischen Grenzwertes mit einer Anpassung der Fahrzeug-Soll-Verzögerung reagiert bis der fahrdynamische Grenzwert wieder eingehalten wird.

Vorzugsweise wird unter einer fahrdynamischen Kenngröße gemäß einer ersten Ausführung eine mittlere Fahrzeug-Vollverzögerung verstanden, die gemäß ECE R13 Annex 4 definiert ist als ein Mittelwert einer tatsächlich vorliegenden Fahrzeug-Ist-Verzögerung betrachtet über einen Zeitraum oder einen zurückgelegten Weg während der Notbremsung. Gemäß der ISO-Norm ISO 26262 wird für die Fahrzeug-Vollverzögerung ein Vollverzögerungs-Grenzwert als fahrdynamischer Grenzwert festgelegt, wobei sich der Vollverzögerungs-Grenzwert daraus ergibt, dass im Rahmen der "funktionalen Sicherheit" gemäß ISO 26262 ein Risiko für einen Auffahrunfall bzw. eine Gefährdung für ein nachfolgendes Fahrzeug minimiert werden soll. Demnach ist vorgesehen, die tatsächlich vorliegende Fahrzeug-Ist-Verzögerung und somit auch die Fahrzeug-Vollverzögerung derartig zu begrenzen, dass das nachfolgende Fahrzeug adäquat reagieren kann, ohne dabei einen schweren Auffahrunfall mit Personenschäden zu verursachen.

Um zu überprüfen, ob das eigene Fahrzeug bei einer eingeleiteten Notbremsung den fahrdynamischen Grenzwert - d. h. den Vollverzögerungs-Grenzwert - einhält, wird die Fahrzeug-Vollverzögerung nach einer eingeleiteten Notbremsung ständig ermittelt und bei Überschreiten des Vollverzögerungs-Grenzwertes die Fahrzeug-Soll-Verzögerung, die vom Bremssystem aufgrund einer erkannten Notbremssituation angefordert wurde, kontinuierlich herabgesetzt, um den Vollverzögerungs-Grenzwert wieder einzuhalten. Denn infolge der Anpassung der angeforderten Fahrzeug-Soll-Verzögerung ändern sich auch die Fahrzeug-Ist-Verzögerung und der Mittelwert der Fahrzeug-Ist-Verzögerung, d. h. die mittlere Fahrzeug-Vollverzögerung.

Bei der Anpassung der Fahrzeug-Soll-Verzögerung an das tatsächlich vorliegende Bremsverhalten wird vorzugsweise auch ein gesetzlich vorgegebener Soll-Verzögerungs-Grenzwert berücksichtigt, der vorgibt, dass die Fahrzeug-Soll-Verzögerung während einer Notbremsung nicht unter 4 m/s$^2$ sinken darf. Bei Überschreitung des Vollverzögerungs-Grenzwertes durch die mittlere Fahrzeug-Vollverzögerung und anschließender Anpassung der Fahrzeug-Soll-Verzögerung wird diese somit nicht unter den Soll-Verzögerungs-Grenzwert eingeregelt, sondern in dem Fall auf dem Soll-Verzögerungs-Grenzwert gehalten bis die mittlere Fahrzeug-Vollverzögerung in einem Bereich liegt, der ein erneutes Anheben der Fahrzeug-Soll-Verzögerung über den Soll-Verzögerungs-Grenzwert erlaubt.

Somit kann eine normgemäße Regelung des Bremssystems während einer Notbremsung stattfinden, ohne dabei auf eine vorab durchgeführte Parametrierung zurückzugreifen, die für einen bestimmten Fahrzeugtyp gilt die allerdings nicht auf bezüglich der Bremsperformance, d. h. insbesondere der Bremskraft, unterschiedlich ausgelegte Bremssysteme innerhalb eines Fahrzeugtyps sowie auch andere Beeinträchtigungen des Bremssystems angepasst ist. Somit ergibt sich auch für unterschiedliche Ausführungen des Bremssystems innerhalb eines Fahrzeugtyps das optimale Bremsverhalten während einer Notbremsung mit minimierten Bremswegen.

Gemäß einer weiteren Ausführung ist ergänzend oder alternativ zur ersten Ausführung vorgesehen, als fahrdynamische Kenngröße eine Fahrzeuggeschwindigkeits-Veränderung zu betrachten. D. h. die Fahrzeug-Soll-Verzögerung wird in einer Notbremssituation ergänzend oder alternativ in Abhängigkeit einer Fahrzeuggeschwindigkeits-Veränderung eingestellt. Demnach wird nach einer eingeleiteten autonomen Notbremsung ständig ermittelt, wie sich die Fahrzeuggeschwindigkeit des eigenen Fahrzeugs ab einer Ausgangsgeschwindigkeit zu Bremsbeginn über die Zeit verändert. Wird ein vorher festgelegter Veränderungs-Grenzwert als weiterer fahrdynamischer Grenzwert überschritten, so wird die Notbremsung abgebrochen, d. h. die Fahrzeug-Soll-Verzögerung auf null gesetzt.

Der vorher festgelegte Veränderungs-Grenzwert der Fahrzeuggeschwindigkeit kann hierbei beispielsweise dem gesetzlich vorgegebenen Minimalwert für eine Notbremsung von 20 km/h entsprechen, d. h. das eigene Fahrzeug wird nach Einleitung der Notbremsung um die gesetzlich geforderten 20 km/h abgebremst und die Notbremsung anschließend abgebrochen. Es können aber auch höhere Werte für den Veränderungs-Grenzwert eingestellt werden.

Der festgelegte Minimalwert bzw. Veränderungs-Grenzwert folgt hierbei zum einen aus Betrachtungen aus Sicht des nachfolgenden Verkehrs, wobei abhängig von einem angenommen Sicherheitsabstand und einer angenommenen Reaktionszeit des nachfolgenden Verkehrs diesem nur ein begrenzter Geschwindigkeitsabbau des davor fahrenden Fahrzeuges zugemutet wird. Baut das davor fahrende Fahrzeug die Fahrzeuggeschwindigkeit zu schnell ab, kommt es zu einer Kollision mit dem nachfolgenden Verkehr. Zum anderen ist aber gleichzeitig innerhalb kurzer Zeit die Fahrzeuggeschwindigkeit des eigenen Fahrzeuges, für das eine hohe Kollisionswahrscheinlichkeit ermittelt wurde, abzubauen, um eine Kollision sowie eine Fehlentscheidung zu vermeiden. Dies wird durch den gesetzlich festgelegten Minimalwert berücksichtigt.

Dadurch kann vorteilhafterweise erreicht werden, dass beispielsweise der gesetzlich geforderte Minimalwert bzw. der entsprechend festgelegte Veränderungs-Grenzwert auch zuverlässig eingehalten werden kann und dieser nicht wie bei herkömmlichen Bremssystemen über eine aus der vorab durchgeführten Parametrierung des Bremssystems abgeleiteten Bremsdauer eingestellt wird. Stimmt die vorab durchgeführte Parametrierung in dem Fall nicht mit dem tatsächlichen Bremsverhalten überein, wird das Fahrzeug über die theoretisch ermittelte Bremsdauer nicht um den festgelegten Veränderungs-Grenzwert abgebremst sondern um einen höheren oder einen niedrigeren Wert. Somit kann vorteilhafterweise vermieden werden, dass eine Notbremssituation fälschlicherweise zu früh oder zu spät abgebrochen wird und somit das Risiko sowie die Gefährdung für den folgenden Verkehr gemäß ISO 26262 nicht minimiert ist sowie die gesetzliche Forderung nicht eingehalten wird.

Somit werden die beiden fahrdynamischen Grenzwerte in Abhängigkeit einer Risikoanalyse und einer Gefährdungsabschätzung gemäß ISO 26262 für das eigene Fahrzeug festgelegt.

Vorzugsweise wird bei Bremsbeginn, d. h. nachdem von einem Notbremssystem im eigenen Fahrzeug eine drohende Kollision bzw. eine zu hohe Kollisionswahrscheinlichkeit erfasst wurde, zunächst eine maximale Fahrzeug-Soll-Verzögerung vom Bremssystem des Fahrzeugs angefordert, so dass im Rahmen der Notbremssituation ein Bremsweg minimiert werden kann. Die maximale Fahrzeug-Soll-Verzögerung richtet sich hierbei nach der Bremsperformance des jeweiligen Bremssystems, insbesondere der maximalen einstellbaren Bremskraft für das jeweilige Fahrzeug. Werden die fahrdynamischen Grenzwerte ab einem bestimmten Zeitpunkt nicht mehr eingehalten, wird die Fahrzeug-Soll-Verzögerung entsprechend herabgesetzt.

Um eine sanfte Regelung der Fahrzeug-Soll-Verzögerung zu erreichen, kann ein prädiziertes Verhalten der fahrdynamischen Kenngrößen betrachtet werden, indem beispielsweise berechnet wird, ab wann die fahrdynamische Kenngröße die fahrdynamischen Grenzwerte nicht mehr einhalten wird. Entsprechend kann auch bereits vor einem Überschreiten reagiert werden, beispielsweise nach Art eines PID (proportional - integral - differential) Reglers. Dadurch kann das Fahrverhalten beruhigt werden, so dass vom Fahrer keine abrupten Bremsungen wahrgenommen werden, die zu einer Panikreaktion oder zu einer weiteren Instabilität des Fahrzeuges führen können. Weiterhin kann durch ein langsames Anpassen der Fahrzeug-Soll-Verzögerung erreicht werden, dass es zu keinen Bremsschlupffällen während der Notbremsung kommt, die den Bremsweg unnötig verlängern und die Stabilität des Fahrzeuges beeinflussen.

Das Erfassen einer Notbremssituation erfolgt vorteilhafterweise durch ein Notbremssystem im Fahrzeug, das Notbrems-Signale von einem Umgebungserfassungs-System, das beispielsweise einen Radarsensor oder einen LIDAR-Sensor aufweist, entgegennimmt. Dazu wird elektromagnetische Strahlung vom Umgebungserfassungs-System in Fahrtrichtung des Fahrzeuges emittiert und vom Radarsensor bzw. vom LIDAR-Sensor elektromagnetische Strahlung detektiert, die von den Objekten im Umfeld reflektiert wurde. Das Umgebungserfassungs-System sendet die elektromagnetische Strahlung hierbei vorzugsweise in einem Winkelbereich aus, so dass auch mehrere Objekte gleichzeitig erfasst werden können, die sich ggf. auch auf einer benachbarten Fahrspur oder neben oder über der Fahrbahn befinden. Das Umgebungserfassungs-System kann hierbei im Notbremssystem integriert sein oder das Notbremssystem greift auf vorhandene Umgebungserfassungs-Systeme im eigenen Fahrzeug zurück.

Anhand der reflektierten elektromagnetischen Strahlung kann das Notbremssystem beispielsweise in der Notbrems-Steuereinheit insbesondere auf einen Abstand, eine Relativgeschwindigkeit und einen Winkel zu dem jeweils erkannten Objekt schließen und beispielsweise jedem erkannten Objekt eine Identifikation zuordnen, so dass das Objekt mit der jeweiligen Identifikation in eindeutiger Weise über die Zeit beobachtet werden kann.

Dadurch kann eine Relativbewegung zwischen dem eigenen Fahrzeug und dem erfassten Objekt und in Abhängigkeit davon beispielsweise die prädizierten Bewegungspfade oder auch die Objekt-Geschwindigkeiten ermittelt werden, die zur Bewertung einer Kollisionswahrscheinlichkeit und somit dem Erkennen einer Notbremssituation herangezogen werden.

Somit sind vorteilhafterweise keine hardwaremäßigen Anpassungen nötig, da ein Umgebungserfassungs-System mit den entsprechenden Sensoren ohnehin Teil eines herkömmlichen Fahrzeuges, insbesondere Nutzfahrzeuges, sind und somit allenfalls eine Anpassung der Software im Notbremssystem oder im Bremssystem des Fahrzeuges nötig ist, um das erfindungsgemäß Verfahren ausführen zu können. Dadurch können der Montage- und der Kostenaufwand minimiert werden.

Die Erfindung wird im Folgenden anhand der beiliegenden Zeichnungen näher erläutert. Es zeigen:

Fig. 1     ein Nutzfahrzeug mit einem Notbremssystem;

Fig. 2     eine Fahrsituation des Nutzfahrzeuges gemäß Fig. 1;

Fig. 3 bis 5     beispielhafte Verläufe von fahrdynamischen Kenngrößen während einer Notbremsung; und

Fig. 6     ein Flussdiagramm des erfindungsgemäßen Verfahrens.

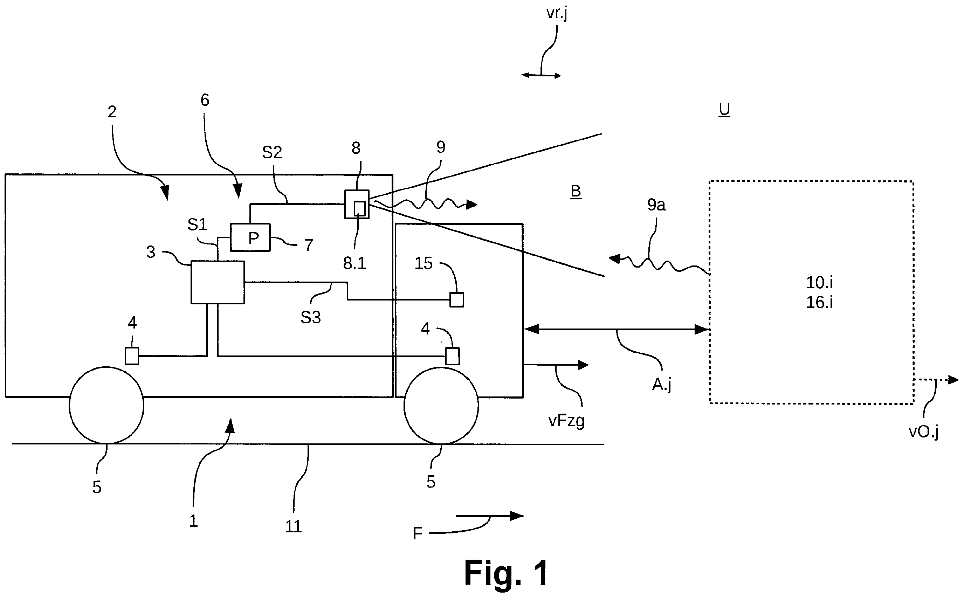

Gemäß Fig. 1 ist ein Fahrzeug 1, insbesondere ein Nutzfahrzeug, dargestellt, das ein Bremssystem 2, insbesondere ein elektrisch gesteuertes pneumatisches, elektrisches oder hydraulisches Bremssystem, aufweist. Im Bremssystem 2 sind Betriebsbremsen 4 vorgesehen, die gesteuert von einer Brems-Steuereinheit 3 die Räder 5 des Fahrzeuges 1 abbremsen können, um das Fahrzeug 1 zu verzögern. Als Teil des Bremssystems 2 ist weiterhin ein Notbremssystem 6 mit einer Notbrems-Steuereinheit 7 vorgesehen, wobei die Notbrems-Steuereinheit 7 gemäß diesem Ausführungsbeispiel als externe Notbrems-Steuereinheit 7 mit der Brems-Steuereinheit 3 verbunden ist und Notbrems-Signale S1 austauschen kann.

Die Notbrems-Steuereinheit 7 ist ausgebildet, in Abhängigkeit eine Kollisionswahrscheinlichkeit P eine Notbremsung zu veranlassen, indem sie bei Erkennen einer drohenden Notbremssituation ein entsprechendes Notbrems-Signal S1 an die Brems-Steuereinheit 3 ausgibt, die daraufhin eine Bremsung veranlasst, so dass das Fahrzeug 1 abgebremst wird. Die Notbremsung wird hierbei autonom, d. h. ohne dass der Fahrer eingreifen muss, herbeigeführt. Ergänzend wird in Abhängigkeit des von der Notbrems-Steuereinheit 7 ausgegebenen Notbrems-Signals S1 ein Warnsignal S3 an eine Warneinrichtung 15 ausgegeben, um den Fahrer des Fahrzeuges 1 vorab vor einer drohenden Notbremssituation zu warnen. Der Fahrer kann dann ggf. noch selbst eine Bremsung des Fahrzeuges 1 veranlassen und/oder eine Lenkung einleiten.

Zum Erkennen der Notbremssituation in Abhängigkeit der Kollisionswahrscheinlichkeit P nimmt die Notbrems-Steuereinheit 7 Sensor-Signale S2 eines Umgebungserfassungs-Systems 8 auf und verarbeitet diese. Das Umgebungserfassungs-System 8 weist gemäß dieser Ausführungsform einen Sensor 8.1, beispielsweise einen Radarsensor oder einen LIDAR-Sensor, auf und strahlt elektromagnetische Strahlung 9 in ein vor dem Fahrzeug 1 bzw. in einer Fahrtrichtung F liegendes Umfeld U ab, wobei die elektromagnetische Strahlung 9 in einem Winkelbereich B abgestrahlt wird, so dass das Umfeld U in einem Winkelbereich B überwacht werden kann.

Die elektromagnetische Strahlung 9 wird an sich bewegenden Objekten 16.i, i=1, 2, 3 (Bewegt-Objekte) als auch an stehenden Objekten 10.i, i=1, 2, 3 (Stationär-Objekte) vor dem Fahrzeug 1 derartig reflektiert, dass ein Teil der von den Objekten 10.i, 16.i reflektierten elektromagnetische Strahlung 9a wieder zum Umgebungserfassungs-System 8 zurückgeworfen wird. Das Umgebungserfassungs-System 8 detektiert diesen Teil der reflektierten elektromagnetischen Strahlung 9a und wertet diesen aus, beispielsweise durch einen Vergleich der abgestrahlten elektromagnetischen Strahlung 9 im Winkelbereich B mit der reflektierten elektromagnetischen Strahlung 9a. Aus der Auswertung kann insbesondere auf einen Abstand A.j zum jeweiligen Objekt 10.i, 16.i, einen Winkel ω.j zum jeweiligen Objekt 10.i, 16.i bezüglich der Fahrtrichtung F des Fahrzeuges 1 sowie aus einer Dopplereffektmessung auf eine Relativgeschwindigkeit vr.j des jeweiligen Objektes 10.i, 16.i relativ zum eigenen Fahrzeug 1 geschlossen werden. Aus der Relativgeschwindigkeit vr.j zum jeweiligen Objekt 10.i, 16.i kann über eine Fahrzeuggeschwindigkeit vFzg des eigenen Fahrzeuges 1 eine entsprechende Objekt-Geschwindigkeit vO.j des jeweiligen Objektes 10.i, 16.i hergeleitet werden.

Der Index "i" sowie der Index "j" verlaufen hierbei über unterschiedliche Wertebereiche, wobei der Abstand A.j, der Winkel ω.j, die Relativgeschwindigkeit vr.j sowie die Objekt-Geschwindigkeit vO.j jeweils in Bezug zu einem der Objekte 10.i, 16.i stehen, d.h. der Abstand A.1 gibt den Abstand zum Stationär-Objekt 10.1, ..., und der Abstand A.4 den Abstand zum Bewegt-Objekt 16.1 an, usw.. D.h. "j" läuft gemäß diesem Ausführungsbeispiel von 1 bis 6 (drei Beweg-Objekte und drei Stationär-Objekte).

Somit kann durch das Umgebungserfassungs-System 8 das Umfeld U in dem Winkelbereich B vor dem Fahrzeug 1 über die elektromagnetische Strahlung 9 abgescannt und der Abstand A.j, der Winkel ω.j sowie die Relativgeschwindigkeit vr.j für jedes erkannte Objekt 10.i, 16.i bestimmt und dem jeweiligen Objekt 10.i, 16.i zugeordnet in der Notbrems-Steuereinheit 7 abgespeichert werden. Diese Informationen A.j, ω.j, vr.j können für das jeweilige Objekt 10.i, 16.i abgespeichert werden, so dass in einfacher Weise die Bewegung des jeweiligen Objektes 10.i, 16.i über die Zeit beobachtet werden kann.

Mit diesen Informationen A.j, ω.j, vr.j zu den einzelnen erfassten Objekten 10.i, 16.i kann die Notbrems-Steuereinheit 7 eine Kollisionswahrscheinlichkeit P für das eigene Fahrzeug 1 mit dem jeweilig erkannten Objekt 10.i, 16.i berechnen und entscheiden, ob eine Notbremssituation vorliegt. Zur Berechnung der Kollisionswahrscheinlichkeit P wird beispielsweise berücksichtigt, ob das eigene Fahrzeug 1 mit der aktuellen Relativgeschwindigkeit vr.j und dem aktuellen Abstand A.j noch rechtzeitig bremsen kann, ohne dass es zu einer Kollision mit Personenschäden mit dem jeweiligen Objekt 10.i, 16.i kommt. Diese Überprüfung wird für jedes erkannte Objekt 10.i, 16.i im Winkelbereich B durchgeführt.

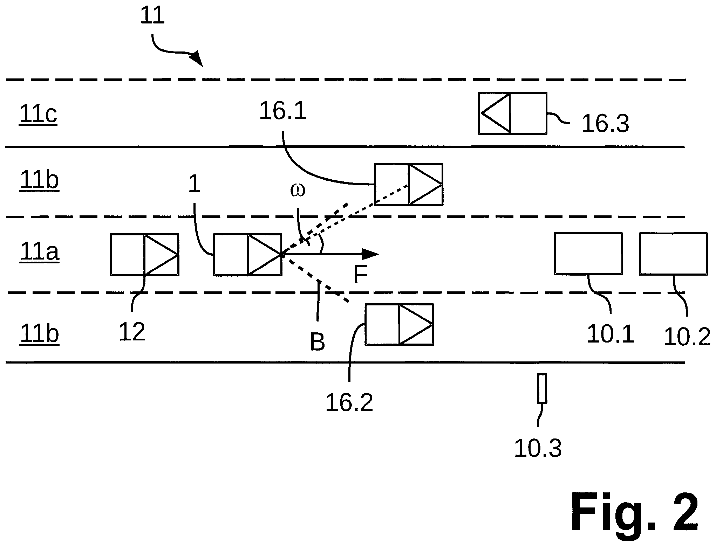

Die Notbrems-Steuereinheit 7 zieht bei ihrer Bewertung der Kollisionswahrscheinlichkeit P sowohl sich bewegende Objekte 16.1, 16.2, 16.3 (Bewegt-Objekte) als auch stehende Objekte 10.1, 10.2, 10.3 (Stationär-Objekte) in Betracht, die in der Fahrtrichtung F des eigenen Fahrzeuges 1 liegen. Eine beispielhafte Fahrsituation mit derartigen Objekten 10.i, 16.i ist in Fig. 2 dargestellt. Ob ein sich bewegendes Objekt 16.i oder ein stehendes Objekt 10.i vorliegt, kann beispielsweise anhand der Relativgeschwindigkeit vr.j des eigenen Fahrzeuges 1 relativ zum jeweiligen Objekt 10.i, 16.i ermittelt werden, wobei die Relativgeschwindigkeit vr.j bei einem stehenden Objekt 10.i dem Negativen der eigenen Fahrzeuggeschwindigkeit vFzg entspricht, d.h. vr.j = - vFzg.

Als sich bewegende Objekte kommen gemäß der Fahrsituation in Fig. 2 insbesondere andere Fahrzeuge 16.i, die sich ebenfalls auf der Fahrbahn 11, d.h. auf derselben Fahrspur 11a, auf einer der benachbarten Fahrspuren 11b oder einer entgegenkommenden Fahrspur 11c, bewegen, in Betracht. Als stationäre Objekte können stehende Fahrzeuge 10.1, 10.2 auf der Fahrbahn 11, insbesondere der eigenen Fahrbahn 11a, berücksichtigt werden aber auch Objekte 10.3, z.B. ein Verkehrsschild, neben der Fahrbahn 11.

Um eine Kollisionswahrscheinlichkeit P mit einem stehenden oder einem sich bewegenden Objekt 10.i, 16.i bewerten zu können, werden im Hinblick auf die "funktionale Sicherheit" gemäß der ISO-Norm ISO 26262 Notbrems-Parameter BK, BT, BD, WD, die ein Bremsverhalten des eigenen Fahrzeuges 1 während einer Notbremssituation vorgeben, einbezogen, die derartig gewählt sind, dass eine mit diesen Notbrems-Parametern BK, BT, BD, WD durchgeführte autonome Notbremsung die ISO-Norm erfüllt. Dadurch soll gemäß der Vorgabe in der ISO-Norm ein Risiko für Auffahrunfälle und eine Gefährdung für den nachfolgenden Verkehr - beispielsweise ein nachfolgendes Fahrzeug 12 - insbesondere im Fall einer Fehlfunktion des Notbremssystems 6 minimiert werden. Die Notbrems-Parameter, mit denen dies erreicht werden soll, sind hierbei insbesondere eine Bremsstärke bzw. eine Bremskraft BK, ein Bremszeitpunkt BT sowie eine Bremsdauer BD, die bei einer autonom durchgeführten Bremsung im Bremssystem 2 eingestellt werden, bzw. eine Warndauer WD für die Warneinrichtung 15 an den Fahrer kurz vor einer drohenden Notbremsung.

Wird anhand der Kollisionswahrscheinlichkeit P eine Notbremssituation erkannt, gibt die Notbrems-Steuereinheit 7 ein entsprechendes Notbrems-Signal S1 an das Bremssystem 2 aus, so dass das Fahrzeug 1 mit den die ISO-Norm einhaltenden Notbrems-Parametern BK, BT, BD im Rahmen der Notbremsung abgebremst wird.

Während einer derartigen Notbremsung wird weiterhin eine fahrdynamische Kenngröße zMFDD, dvFzg, die eine Entwicklung der Fahrzeuggeschwindigkeit vFzg während einer Notbremsung und somit eine tatsächliche Reaktion des Fahrzeuges 1 auf die Notbremsung charakterisiert, überwacht. Die fahrdynamische Kenngröße betrifft gemäß einer ersten Ausführung die mittlere Fahrzeug-Vollverzögerung zMFDD (mean fully developed deceleration, MFDD) nach den Vorschriften der ECE R13 Annex 4, wobei die mittlere Fahrzeug-Vollverzögerung zMFDD einen Mittelwert einer Fahrzeug-Ist-Verzögerung zlst bezogen auf einen zurückgelegten Weg s bzw. eine durchlaufene Zeit t angibt.

Die mittlere Fahrzeug-Vollverzögerung zMFDD wird hierbei gemäß der ECE R13, Annex 4 definiert als

$$zMDFF = (va^2 - vb^2)/(25.92*(sa-sb)) \qquad (F1),$$

wobei va eine erste Geschwindigkeitsabweichung, die 0.8*v0 entspricht, angibt, wobei v0 eine Ausgangsgeschwindigkeit ist, die zu Beginn der Notbremsung vorliegt, vb eine zweite Geschwindigkeitsabweichung, die 0,1*v0 entspricht, und sa und sb die zu den jeweiligen Geschwindigkeitsabweichungen va, vb zurückgelegten Wege in Metern angeben.

Alternativ kann die mittlere Fahrzeug-Vollgeschwindigkeit zMFDD in Bezug auf die Zeit t berechnet werden als

$$zMDFF = (vb - va)/(tb - ta) \quad (F2),$$

wobei ta und tb die Zeitpunkte angeben, zu denen die jeweiligen Geschwindigkeitsabweichungen va, vb vorliegen.

Über die beiden Geschwindigkeitsabweichungen va, vb wird berücksichtigt, dass zu Beginn einer Notbremsung, d.h. bis 80% der Ausgangsgeschwindigkeit v0 erreicht sind, sowie kurz vor Ende der Bremsung, d.h. bei 10% der Ausgangsgeschwindigkeit v0, Totzeiten und Schwellzeiten vorliegen, die die Bestimmung der mittleren Fahrzeug-Vollverzögerung zMFDD verfälschen. Daher bleiben diese bei der Berechnung unberücksichtigt.

Zur kontinuierlichen Bestimmung der mittleren Fahrzeug-Vollverzögerung zMDFF während der Fahrt wird bei Bremsbeginn zunächst die Ausgangsgeschwindigkeit v0 ermittelt und ab einer aktuellen Fahrzeuggeschwindigkeit von Fzg = 0.8*v0 der folgende Zusammenhang berechnet:

$$zMDFF = (vFzg - va)/(tFzg - ta) \quad (F3),$$

wobei vFzg die aktuell vorliegende Fahrzeuggeschwindigkeit und tFzg eine aktuelle Zeit ab Bremsbeginn angeben, va bzw. ta geben die erste Geschwindigkeitsabweichung sowie den ersten Zeitpunkt, zu dem die erste Geschwindigkeitsabweichung va vorliegt, an. Diese Berechnung findet statt, bis die Fahrzeuggeschwindigkeit vFzg der zweiten Geschwindigkeitsabweichung entspricht, d. h. bis die aktuelle Fahrzeuggeschwindigkeit vFzg auf 10% der Ausgangsgeschwindigkeit v0 abgefallen ist. Ab dann wird die mittlere Fahrzeug-Vollverzögerung zMFDD auf dem aktuellen Wert gehalten, um den Wert bei niedrigen Fahrzeuggeschwindigkeiten vFzg nicht zu verfälschen.

Zur adaptiven Regelung während einer autonomen Notbremsung wird die mittlere Fahrzeug-Vollverzögerung zMFDD bei einer Anforderung einer gewissen Fahrzeug-Soll-Verzögerung zSoll im Rahmen der Notbremsung ständig nach obiger Formel F3 bestimmt, beispielsweise in der Brems-Steuereinheit 3 oder der Notbrems-Steuereinheit 7. Wird festgestellt, dass die mittlere Fahrzeug-Vollverzögerung zMDFF einen vorher festgelegten Vollverzögerungs-Grenzwert zo (fahrdynamischer Grenzwert) überschreitet, wird die Fahrzeug-Soll-Verzögerung zSoll entsprechend verringert.

Der Vollverzögerungs-Grenzwert zo wird hierbei insbesondere durch die ISO-Norm ISO 26262 vorgegeben, die eine Risikoanalyse und eine Gefährdungsabschätzung fordert, an die der Vollverzögerungs-Grenzwert zo anzupassen ist, so dass für das nachfolgende Fahrzeug 12 bei einem Auffahrunfall die Risiken und Gefährdungen minimiert werden. Weiterhin ist gesetzlich ein Soll-Verzögerungs-Grenzwert zl vorgegeben, der angibt, dass die Fahrzeug-Soll-Verzögerung zSoll in einer Notbremssituation nicht unter 4m/s$^2$ abfallen darf.

Demnach ist gemäß diesem Ausführungsbeispiel für die mittlere Fahrzeug-Vollverzögerung zMFDD ein von der Bremsperformance des Bremssystems 2 abhängiger, die ISO-Norm einhaltender Vollverzögerungs-Grenzwert zo von beispielsweise 7,5 m/s$^2$ als fahrdynamischer Grenzwert und für die Fahrzeug-Soll-Verzögerung zSoll ergänzend ein gesetzlich festgelegter Soll-Verzögerungs-Grenzwert zl von 4m/s$^2$ vorgegeben. In Abhängigkeit dieser Grenzwerte zo, zl findet bei eingeleiteter Notbremsung die Regelung der Fahrzeug-Soll-Verzögerung zSoll statt.

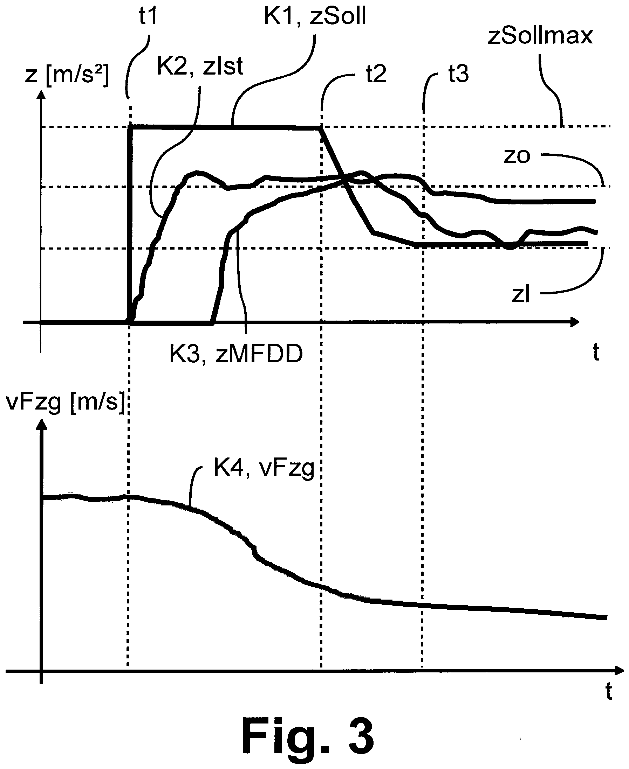

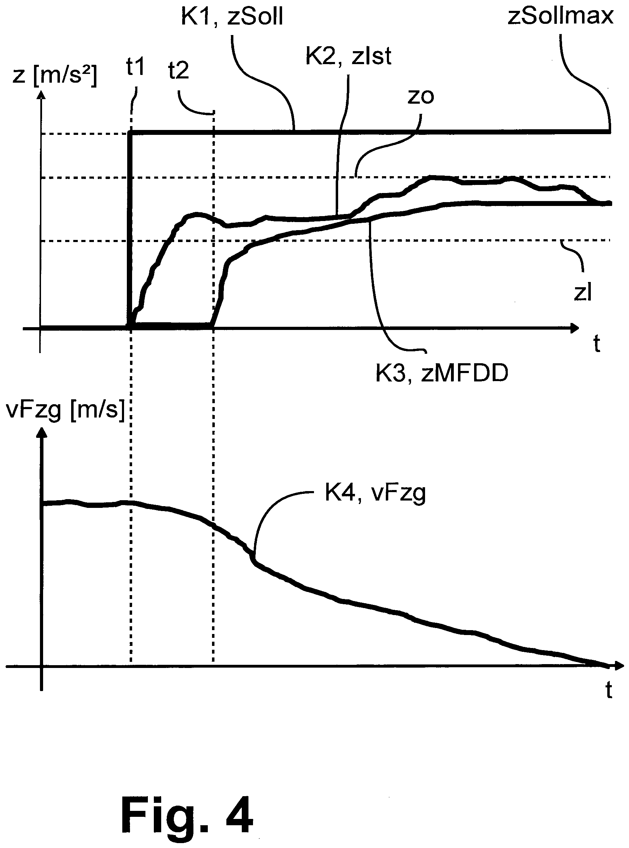

Beispielhaft sind zwei autonom durchgeführte Notbremsungen in den Figuren 3 und 4 dargestellt, wobei der Verlauf der Fahrzeug-Soll-Verzögerung zSoll in einer ersten Kurve K1, der Verlauf der Fahrzeug-Ist-Verzögerung zlst in einer zweiten Kurve K2 und der Verlauf der mittleren Fahrzeug-Vollverzögerung zMDFF in einer dritten Kurve K3 dargestellt ist. Die vierte Kurve K4 zeigt die Entwicklung der Fahrzeuggeschwindigkeit vFzg.

Zu Beginn einer autonomen Notbremsung wird an einem ersten Bremszeitpunkt t1 zunächst eine maximale Fahrzeug-Soll-Verzögerung zSollmax von beispielsweise 10m/s$^2$ angefordert, wobei diese je nach Bremsperformance des Fahrzeuges 1 auch niedriger sein kann. Dadurch wird erreicht, dass zumindest zu Beginn einer Notbremsung sofort maximal reagiert wird und sich somit der Bremsweg für das eigene Fahrzeug 1 minimiert werden kann. Infolge dessen steigt eine Fahrzeug-Ist-Verzögerung zlst zu Bremsbeginn stark an.

Wird während der autonomen Notbremsung mit der maximalen Fahrzeug-Soll-Verzögerung zSollmax festgestellt, dass der Vollverzögerungs-Grenzwert zo durch die Fahrzeug-Vollverzögerung zMFDD (s. K3) überschritten wurde bzw. ein Überschreiten kurz bevorsteht, was gemäß Fig. 3 in etwa zu einem zweiten Bremszeitpunkt t2 der Fall ist, wird die Fahrzeug-Soll-, Verzögerung zSoll ab diesem Zeitpunkt bis zum Soll-Verzögerungs-Grenzwert zl = 4m/s$^2$ reduziert, so dass als Reaktion darauf kurze Zeit später auch die Fahrzeug-Ist-Verzögerung zIst und damit auch die mittlere Fahrzeug-Vollverzögerung zMDFF abfallen. Entsprechend ist auch die Veränderung der Fahrzeuggeschwindigkeit vFzg geringer, da weniger stark abgebremst wird. Die Reaktion des Bremssystems 2 auf die Veränderung der Fahrzeug-Soll-Verzögerung zSoll kann hierbei wie in Fig. 3 dargestellt zeitlich leicht versetzt erfolgen, da das Bremssystem 2 nicht sofort auf die Veränderung reagiert. Zu einem dritten Bremszeitpunkt t3 unterschreitet die mittlere Fahrzeug-Vollverzögerung zMDFF den Voll-Verzögerungs-Grenzwert zo wieder, so dass die Fahrzeug-Soll-Verzögerung zSoll gehalten werden kann.

Um kein pulsierendes, abruptes oder überschwingendes Verhalten des Bremssystems 2 zu erhalten, das vom Fahrer als unangenehm empfunden wird, findet eine weiche Regelung derartig statt, dass bereits dann ein Anpassen der Fahrzeug-Soll-Verzögerung zSoll erfolgt, wenn ein Überschreiten des Vollverzögerungs-Grenzwertes zo droht, wobei die Anpassung langsam über eine Rampe, d.h. ohne ein abruptes Herabsetzen der Fahrzeug-Soll-Verzögerung (s. Fig. 3), erfolgt. Dies kann beispielsweise anhand eines prädizierten Verlaufes der Fahrzeug-Vollverzögerung zMFDD ermittelt werden, indem in Abhängigkeit des derzeitigen Verlaufes ein mögliches Überschreiten des Vollverzögerungs-Grenzwertes zo abgeschätzt wird und entsprechend durch eine Anpassung der Fahrzeug-Soll-Verzögerung zSoll reagiert wird. Hier kann beispielsweise eine Regelung nach Art eines PID-Reglers (proportional-integral-derivative) erfolgen.

Gemäß der Bremssituation in Fig. 4 findet keine adaptive Anpassung der Fahrzeug-Soll-Verzögerung zSoll statt, da die Grenzwerte zo, zl nach dem Bremsbeginn, d.h. für t>t1, eingehalten werden.

Alternativ oder parallel zu der adaptiven Regelung der Fahrzeug-Soll-Verzögerung zSoll in Abhängigkeit der mittleren Fahrzeug-Vollverzögerung zMFDD als fahrdynamische Kenngröße kann während der Notbremsung auch eine Anpassung des Bremsverhaltens in Abhängigkeit einer Fahrzeuggeschwindigkeits-Veränderung dvFzg als fahrdynamische Kenngröße stattfinden. Ein Veränderungs-Grenzwert dvFzgmax als fahrdynamischer Grenzwert berücksichtigt hierbei, um welchen Betrag die Fahrzeuggeschwindigkeit vFzg bei einer durchgeführten Notbremsung maximal fallen darf, um beispielsweise gemäß ISO 26262 das vorgegebene Risiko und die Gefährdung für den nachfolgenden Verkehr gering zu halten. Ist der Veränderungs-Grenzwert dvFzgmax erreicht, wird die Fahrzeug-Soll-Verzögerung zSoll auf null geregelt, d.h. die Notbremsung abgebrochen, um den gesetzlichen Bestimmungen zu entsprechen.

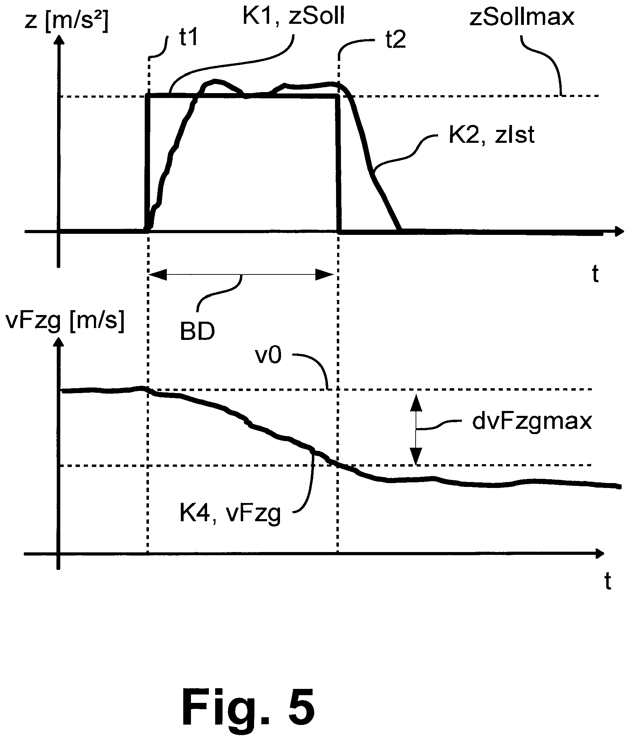

Dazu wird gemäß Fig. 5 bei Bremsbeginn zum ersten Bremszeitpunkt t1 die Ausganggeschwindigkeit v0 bestimmt und anschließend nach Anforderung der maximalen Fahrzeug-Soll-Verzögerung zSollmax kontinuierlich die aktuelle Fahrzeuggeschwindigkeit vFzg gemessen. Sobald die Fahrzeuggeschwindigkeit vFzg um den Veränderungs-Grenzwert dvFzgmax - hier 20km/h - gefallen ist, wird die Fahrzeug-Soll-Verzögerung zSoll nach der Bremsdauer BD auf null gesetzt, um der ISO 26262 zu entsprechen und das nachfolgende Fahrzeug 12 nicht zu gefährden. Die Bremsdauer BD ist hierbei je nach Auslegung des Bremssystems 2 unterschiedlich.

Bei einer Kombination beider Ausführungen, d.h. wenn sowohl auf die Fahrzeug-Vollverzögerung zMFDD als auch auf die Fahrzeuggeschwindigkeits-Änderung dvFzg geregelt wird, findet die Anpassung der Fahrzeug-Soll-Verzögerung zSoll entsprechend statt. Ist demnach der Veränderungs-Grenzwert dvFzgmax noch nicht erreicht, wird innerhalb der Grenzwerte zl, zo geregelt. Bei Erreichen des Veränderungs-Grenzwertes dvFzgmax wird die Notbremsung abgebrochen und ein Einhalten der o.g. Grenzwerte zl, zo ist nicht mehr vorgesehen.

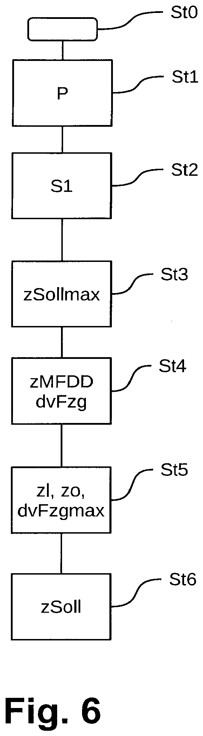

Das erfindungsgemäße Verfahren kann gemäß Fig. 6 beispielsweise folgendermaßen stattfinden:

In einem anfänglichen Schritt St0 wird das Notbremssystem 6 initialisiert, beispielsweise mit dem Starten des Fahrzeuges 1. In einem darauffolgenden ersten Schritt St1 wird vom Notbremssystem 6 das Umfeld U vor dem Fahrzeug 1 auf vorausliegende Objekte 10.i, 16.i überwacht, um zu bewerten, ob eine Notbremssituation vorliegt, indem die Kollisionswahrscheinlichkeit P zu den vorausliegenden Objekten 10.i, 16.i ermittelt wird. Wurde eine Notbremssituation erkannt, d.h. droht eine unausweichliche Kollision mit einem vorausfahrenden Fahrzeug 10.1, 10.2, wird in einem zweiten Schritt St2 vom Notbremssystem 6 ein Notbrems-Signal S1 ausgegeben, in Abhängigkeit dessen vom Bremssystem 2 eine Notbremsung autonom durchgeführt wird, wobei das Bremssystem 2 dazu in einem dritten Schritt St3 mit einer für das entsprechende Bremssystem 2 maximalen Fahrzeug-Soll-Verzögerung zSollmax angesteuert wird.

In einem vierten Schritt St4 werden die fahrdynamischen Kenngrößen zMFDD, dvFzg überwacht, d.h. anhand der im Fahrzeug 1 gemessenen Fahrzeuggeschwindigkeit vFzg wird gemäß Formel F3 die mittlere Fahrzeug-Vollverzögerung zMFDD bestimmt und/oder eine Fahrzeuggeschwindigkeits-Veränderung dvFzg ab Bremsbeginn, d. h. ab dem ersten Bremszeitpunkt t1 ermittelt.

In einem fünften Schritt St5 wird ermittelt, ob die fahrdynamische Kenngröße zMFDD, dvFzg den jeweiligen fahrdynamischen Grenzwert, d.h. den Vollverzögerungs-Grenzwert zo und/oder den Veränderungs-Grenzwert dvFzgmax einhält. Bei Einhaltung wird die Fahrzeug-Soll-Verzögerung zSoll beibehalten, d.h. es wird nichts unternommen. Bei Nicht-Einhalten der fahrdynamischen Grenzwerte zo, dvFzgmax wird in einem sechsten Schritt St6 die Fahrzeug-Soll-Verzögerung zSoll unter Berücksichtigung des Soll-Verzögerungs-Grenzwertes zl derartig angepasst, insbesondere abgesenkt, dass die fahrdynamischen Grenzwerte zo, dvFzgmax wieder eingehalten werden.

Bezugszeichenliste

| | |
|---|---|
| 1 | Fahrzeug |
| 2 | Bremssystem |
| 3 | Brems-Steuereinheit |
| 4 | Betriebsbremsen |
| 5 | Räder |
| 6 | Notbremssystem |
| 7 | Notbrems-Steuereinheit |
| 8 | Umgebungserfassungs-System |
| 8.1 | Sensor, Radars-Sensor, LIDAR-Sensor |
| 9 | elektromagnetische Strahlung |
| 9a | reflektierte elektromagnetische Strahlung |
| 10.i | stehende Fahrzeuge auf der Fahrbahn (Stationär-Objekt) |
| 11 | Fahrbahn |
| 11a | eigene Fahrspur |
| 11b | benachbarte Fahrspur |
| 11c | entgegenkommende Fahrspur |
| 12 | nachfolgendes Fahrzeug |
| 15 | Warneinrichtung |
| 16.i | sich bewegende Objekte (Bewegt-Objekt) |
| A | Abstand |
| B | Winkelbereich |
| BD | Bremsdauer |
| BK | Bremskraft |
| BT | Bremszeitpunkt |
| dvFzg | Fahrzeuggeschwindigkeits-Veränderung |
| dvFzgmax | Veränderungs-Grenzwert (fahrdynamischer Grenzwert) |
| F | Fahrtrichtung |
| K1 | erste Kurve (Fahrzeug-Soll-Verzögerung) |
| K2 | zweite Kurve (Fahrzeug-Ist-Verzögerung) |
| K3 | dritte Kurve (mittlere Fahrzeug-Vollverzögerung) |
| K4 | vierte Kurve (Fahrzeuggeschwindigkeit) |
| P | Kollisionswahrscheinlichkeit |
| s | Weg |
| sa | erster zurückgelegter Weg |
| sb | zweiter zurückgelegter Weg |
| S1 | Notbrems-Signale |
| S2 | Sensor-Signale |
| S3 | Warnsignal |
| t | Zeit |
| t1 | erster Bremszeitpunkt |
| t2 | zweiter Bremszeitpunkt |
| t3 | dritter Bremszeitpunkt |
| ta | erster Zeitpunkt |
| tb | zweiter Zeitpunkt |
| tFzg | aktuelle Zeit ab Bremsbeginn |
| U | Umfeld |
| v0 | Ausgangsgeschwindigkeit |
| va | erste Geschwindigkeitsabweichung |
| vb | zweite Geschwindigkeitsabweichung |
| vFzg | Fahrzeuggeschwindigkeit |
| vO.i | Objekt-Geschwindigkeit |
| vr | Relativgeschwindigkeit |
| w | Winkel |
| WD | Warndauer |

| zo | Vollverzögerungs-Grenzwert (fahrdynamischer Grenzwert) |
| zSoll | Fahrzeug-Soll-Verzögerung |
| zSollmax | maximale Fahrzeug-Soll-Verzögerung |
| zIst | Fahrzeug-Ist-Verzögerung |
| zl | Soll-Verzögerungsgrenzwert |
| F1, F2, F3 | Formeln |
| St1, St2, St3, St4, St5, St6 | Schritte des Verfahrens |

**Patentansprüche**

1. Verfahren zum Durchführen einer Notbremsung in einem Fahrzeug (1), insbesondere Nutzfahrzeug, mit mindestens den folgenden Schritten:

   - Erfassen mindestens eines Objektes (10.i, 16.i; i=1,...,3) in einem Umfeld (U) des Fahrzeuges (1) und Ermitteln einer Kollisionswahrscheinlichkeit (P) für das eigene Fahrzeug (1) mit dem mindestens einen erfassten Objekt (10.i, 16.i) zum Erkennen einer Notbremssituation (St1);
   - Autonomes Ansteuern von Betriebsbremsen (5) des Fahrzeuges (1) mit einer Fahrzeug-Soll-Verzögerung (zSoll) zum Durchführen einer Notbremsung, wenn eine Notbremssituation erkannt wurde (St2, St3);
   - Anpassen der Fahrzeug-Soll-Verzögerung (zSoll) während der autonom durchgeführten Notbremsung (St6), wobei

   das Anpassen der Fahrzeug-Soll-Verzögerung (zSoll) in Abhängigkeit mindestens einer fahrdynamischen Kenngröße (zMFDD, dvFzg) stattfindet, wobei die fahrdynamische Kenngröße (zMFDD, dvFzg) eine tatsächliche Reaktion des eigenen Fahrzeuges (1) auf die durchgeführte Notbremsung charakterisiert (St4, St5) und die fahrdynamische Kenngröße (zMFDD, dvFzg) während der Notbremsung ermittelt wird,
   **dadurch gekennzeichnet, dass**
   die Fahrzeug-Soll-Verzögerung (zSoll) lediglich dann angepasst wird, wenn die mindestens eine fahrdynamische Kenngröße (zMFDD, dvFzg) einen fahrdynamischen Grenzwert (zo, dvFzgmax) nicht einhält.

2. Verfahren nach Anspruch 1, **dadurch gekennzeichnet, dass** die mindestens eine fahrdynamische Kenngröße eine mittlere Fahrzeug-Vollverzögerung (zMDFF) ist.

3. Verfahren nach Anspruch 2, **dadurch gekennzeichnet, dass** als fahrdynamischer Grenzwert ein Vollverzögerungs-Grenzwert (zo) für die mittlere Fahrzeug-Vollverzögerung (zMDFF) festgelegt wird, wobei die Fahrzeug-Soll-Verzögerung (zSoll) dann angepasst wird, wenn die mittlere Fahrzeug-Vollverzögerung (zMDFF) den Vollverzögerungs-Grenzwert (zo) überschreitet.

4. Verfahren nach einem der vorhergehenden Ansprüche, **dadurch gekennzeichnet, dass** die mindestens eine fahrdynamische Kenngröße eine Fahrzeuggeschwindigkeits-Veränderung (dvFzg) ist, die eine Änderung der Fahrzeuggeschwindigkeit (vFzg) ab einem ersten Bremszeitpunkt (t1) zu Beginn der Notbremsung angibt.

5. Verfahren nach Anspruch 4, **dadurch gekennzeichnet, dass** als fahrdynamischer Grenzwert ein Veränderungs-Grenzwert (dvFzgmax) für die Fahrzeuggeschwindigkeits-Veränderung (dvFzg) festgelegt wird, wobei die Fahrzeug-Soll-Verzögerung (zSoll) dann angepasst wird, wenn die Fahrzeuggeschwindigkeits-Veränderung (dvFzg) größer ist als der Veränderungs-Grenzwert (dvFzgmax).

6. Verfahren nach einem der vorhergehenden Ansprüche, **dadurch gekennzeichnet, dass** bei der Anpassung der Fahrzeug-Soll-Verzögerung (zSoll) während der Notbremsung weiterhin ein Soll-Verzögerungs-Grenzwert (zl) festgelegt wird, wobei die Fahrzeug-Soll-Verzögerung (zSoll) während der Notbremsung auf einem Wert gehalten wird, der größer ist als der Soll-Verzögerungs-Grenzwert (zl).

7. Verfahren nach einem der vorhergehenden Ansprüche, **dadurch gekennzeichnet, dass** zu einem ersten Bremszeitpunkt (t1) zu Beginn der Notbremsung eine maximale Fahrzeug-Soll-Verzögerung (zSollmax) eingestellt wird.

8. Notbremssystem (6) zur Durchführung des Verfahrens nach einem der vorhergehenden Ansprüche, wobei das Notbremssystem (6) eine Notbrems-Steuereinheit (7) aufweist, die ausgebildet ist, anhand von Sensor-Signalen (S2) eines Umgebungserfassungs-Systems (8) eine Kollisionswahrscheinlichkeit (P) für das eigene Fahrzeug (1) mit einem erfassten Objekt (10.i, 16.i) zu bestimmen und die von einem Bremssystem (2) des Fahrzeuges (1) in Reaktion auf die erkannte Notbremssituation angeforderte Fahrzeug-Soll-Verzögerung (zSoll) in Abhängigkeit von während der Notbremsung ermittelten fahrdynamischen Kenngrößen (zMDFF, dvFzg) festzulegen.

9. Fahrzeug (1), insbesondere Nutzfahrzeug, mit einem Notbremssystem (6) nach Anspruch 8, zur Durchführung des Verfahrens nach einem der Ansprüche 1 bis 7.

**Claims**

1. A method for performing emergency braking in a motor vehicle (1), in particular a utility vehicle, having at least the following steps:

   - sensing at least one object (10.i, 16.i; i=1,..., 3) in an environment (U) of the motor vehicle (1) and determining a collision probability (P) for the own motor vehicle (1) having the at least one sensed object (10.i, 16.i) to detect an emergency braking situation (St1);
   - autonomous actuating of service brakes (5) of the motor vehicle (1) with a target motor vehicle deceleration (zSoll) for performing emergency braking when an emergency braking situation has been detected (St2, St3);
   - adjusting the target motor vehicle deceleration (zSoll) during the autonomously performed emergency braking (St6), wherein

   the adjusting of the target motor vehicle deceleration (zSoll) takes place as a function of at least one driving dynamics parameter (zMFDD, dvFzg), wherein the driving dynamics parameter (zMFDD, dvFzg) characterizes an actual reaction of the own motor vehicle (1) to the performed emergency braking (St4, St5) and the driving dynamics parameter (zMFDD, dvFzg) is determined during the emergency braking,
   **characterized in that**
   the target motor vehicle deceleration (zSoll) will only be adjusted when the at least one driving dynamics parameter (zMFDD, dvFzg) does not contain a driving dynamics limit value (zo, dvFzgmax).

2. The method according to claim 1, **characterized in that** the at least one driving dynamics parameter is a mean full vehicle deceleration (zMDFF).

3. The method according to claim 2, **characterized in that** a full deceleration limit value (zo) is defined as a driving dynamics limit value for the mean full vehicle deceleration (zMDFF), wherein the target motor vehicle deceleration (zSoll) is adjusted when the mean full vehicle deceleration (zMDFF) exceeds the full deceleration limit value (zo).

4. The method according to any of the foregoing claims, **characterized in that** the at least one driving dynamics parameter is a motor vehicle speed change (dvFzg), which specifies a change in the motor vehicle speed (vFzg) from a first braking time (t1) at the start of the emergency braking.

5. The method according to claim 4, **characterized in that** a change limit value (dvFzgmax) is defined as the driving dynamics limit value for the motor vehicle speed change (dvFzg), wherein the target motor vehicle deceleration (zSoll) is adjusted when the motor vehicle speed change (dvFzg) is greater than the change limit value (dvFzgmax).

6. The method according to any of the foregoing claims, **characterized in that** in the adjustment of the target motor vehicle deceleration (zSoll) during emergency braking, a target deceleration limit value (zl) is furthermore defined, wherein the target motor vehicle deceleration (zSoll) during emergency braking is kept at a value that is greater than the target deceleration limit value (zl).

7. The method according to any of the foregoing claims, **characterized in that** a maximum target motor vehicle deceleration (zSollmax) is set at a first braking time (t1) at the start of the emergency braking.

8. An emergency braking system (6) for performing the method according to any of the foregoing claims, wherein the emergency braking system (6) comprises an emergency brake control unit (7) which, with the assistance of sensor signals (S2) of an environment detection system (8), is configured to determine a collision probability (P) for the own motor vehicle (1) with a sensed object (10.i, 16.i) and to define the target motor vehicle deceleration (zSoll) requested by a braking system (2) of the motor vehicle (1) in reaction to the detected emergency braking situation as a function of driving dynamics parameters (zMDFF, dvFzg) determined during the emergency braking.

9. A motor vehicle (1), in particular a utility vehicle, having an emergency braking system (6) according to claim 8, for performing the method according to any of claims 1 to 7.

**Revendications**

1. Procédé pour la mise en œuvre d'un freinage d'urgence dans un véhicule (1), en particulier véhicule utilitaire, avec au moins les étapes suivantes :

   - la détection d'au moins un objet (10.i, 16.i ; i=1,...,3) dans un environnement (U) du véhicule (1) et la détermination d'une probabilité de collision (P) pour le véhicule (1) propre avec le au moins un objet (10.i, 16.i) détecté pour l'identification d'une situation de freinage d'urgence (St1) ;
   - la commande autonome de freins de service (5) du véhicule (1) avec une décélération de consigne de véhicule (zSoll) pour la mise en œuvre d'un freinage d'urgence, lorsqu'une situation de freinage d'urgence a été identifiée (St2, St3) ;
   - l'adaptation de la décélération de consigne de véhicule (zSoll) pendant le freinage d'urgence mis en œuvre de façon autonome (St6), dans lequel

   l'adaptation de la décélération de consigne de véhicule (zSoll) a lieu en fonction d'au moins une grandeur caractéristique de dynamique de conduite (zMFDD, dvFzg), dans lequel la grandeur caractéristique de dynamique de conduite (zMFDD, dvFzg) caractérise une réponse réelle du véhicule (1) propre au freinage d'urgence mis en œuvre (St4, St5) et la grandeur caractéristique de dynamique de conduite (zMFDD, dvFzg) est déterminée pendant le freinage d'urgence,
   **caractérisé en ce que**
   la décélération de consigne de véhicule (zSoll) n'est adaptée que lorsque la au moins une grandeur caractéristique de dynamique de conduite (zMFDD, dvFzg) ne respecte pas une valeur limite de conduite dynamique (zo, dvFzgmax).

2. Procédé selon la revendication 1, **caractérisé en ce que** la au moins une grandeur caractéristique de dynamique de conduite est une décélération complète moyenne de véhicule (zMDFF).

3. Procédé selon la revendication 2, **caractérisé en ce qu'**une valeur limite de décélération complète (zo) pour la décélération complète moyenne de véhicule (zMDFF) est fixée comme valeur limite de dynamique de conduite, dans lequel la décélération de consigne de véhicule (zSoll) est alors adaptée lorsque la décélération complète moyenne de véhicule (zMDFF) dépasse la valeur limite de décélération complète (zo).

4. Procédé selon l'une quelconque des revendications précédentes, **caractérisé en ce que** la au moins une grandeur caractéristique de dynamique de conduite est une modification de vitesse de véhicule (dvFzg), qui indique un changement de la vitesse de véhicule (vFzg) à partir d'un premier moment de freinage (t1) au début du freinage d'urgence.

5. Procédé selon la revendication 4, **caractérisé en ce qu'**une valeur limite de modification (dvFzgmax) pour la modification de vitesse de véhicule (dvFzg) est fixée comme valeur limite de dynamique de conduite, dans lequel la décélération de consigne de véhicule (zSoll) est adaptée lorsque la modification de vitesse de véhicule (dvFzg) est plus grande que la valeur limite de modification (dvFzgmax).

6. Procédé selon l'une quelconque des revendications précédentes, **caractérisé en ce que** lors de l'adaptation de la décélération de consigne de véhicule (zSoll) pendant le freinage d'urgence une valeur limite de décélération de consigne (zl) est en outre fixée, dans lequel la décélération de consigne de véhicule (zSoll) est maintenue pendant le freinage d'urgence à une valeur qui est plus grande que la valeur limite de décélération de consigne (zl).

7. Procédé selon l'une quelconque des revendications précédentes, **caractérisé en ce qu'**une décélération de consigne de véhicule maximale (zSollmax) est réglée à un premier moment de freinage (t1) au début du freinage d'urgence.

8. Système de freinage d'urgence (6) pour la mise en œuvre du procédé selon l'une quelconque des revendications précédentes, dans lequel le système de freinage d'urgence (6) présente une unité de commande de freinage d'urgence (7), qui est réalisée pour définir sur la base de signaux de capteur (S2) d'un système de détection d'environnement (8) une probabilité de collision (P) pour le véhicule (1) propre avec un objet (10.i, 16.i) détecté et pour fixer la décélération de consigne de véhicule (zSoll) demandée par un système de freinage (2) du véhicule (1) en réponse à la situation de freinage d'urgence identifiée en fonction de grandeurs caractéristiques de dynamique de conduite (zMDFF, dvFzg) déterminées pendant le freinage d'urgence.

9. Véhicule (1), en particulier véhicule utilitaire, avec un système de freinage d'urgence (6) selon la revendication 8, pour la mise en œuvre du procédé selon l'une quelconque des revendications 1 à 7.

**Fig. 1**

EP 3 475 130 B1

Fig. 2

**Fig. 3**

**Fig. 4**

**Fig. 5**

St0

| P | — St1 |

| S1 | — St2 |

| zSollmax | — St3 |

| zMFDD dvFzg | — St4 |

| zl, zo, dvFzgmax | — St5 |

| zSoll | — St6 |

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219188 A1
- DE 102004028160 A1
- DE 19921238 C2
- US 7321819 B2
- DE 102004054922 A1